# FASCICULE DE BREVET EUROPEEN

(11) **EP 3 850 328 B1**
(45) Date de publication et mention de la délivrance du brevet: **16.08.2023**
(21) Numéro de dépôt: 19765483.3
(22) Date de dépôt: 09.09.2019
(51) Int. Cl.: G01N 1/04, G01N 1/08, B26D 7/18, B26F 1/38, B26D 3/00

(54) **SYSTÈME ET PROCÉDÉ D'ÉCHANTILLONNAGE AUTOMATIQUE**
AUTOMATISCHES PROBENAHMESYSTEM UND VERFAHREN
AUTOMATIC SAMPLING SYSTEM AND METHOD

(30) Priorité: 13.09.2018 FR 1858196
(43) Date de publication de la demande: 21.07.2021
(73) Titulaire: COMPAGNIE GENERALE DES ETABLISSEMENTS MICHELIN, 63000 Clermont-Ferrand (FR)
(72) Inventeur: ABLONET, Thierry, 63040 Clermont-Ferrand Cedex 9 (FR)
(74) Mandataire: Roussy, Delphine
(86) Numéro de dépôt international: PCT/EP2019/073978
(87) Numéro de publication internationale: WO 2020/053139

(56) Documents cités:
- JP-A- 2007 171 117

## Description

### DOMAINE TECHNIQUE

L'invention concerne de manière générale l'échantillonnage d'une bande de caoutchouc pour examiner ses propriétés. Plus particulièrement, l'invention concerne l'échantillonnage automatique du caoutchouc pour empêcher des variations inattendues dans les propriétés du caoutchouc après que la bande de caoutchouc soit mise en forme.

### CONTEXTE

Dans le domaine de fabrication de mélange de caoutchouc, des lignes de mélangeage, constituées de mélangeurs externes et/ou internes, continus et/ou discontinus, sont reconnus pour réaliser des processus de mélangeage de caoutchouc. Dans les mélangeurs (continus et discontinus), il est possible que la dispersion et le rapport de mélange des matières premières (par exemple, les produits chimiques) soient modifiés. Il est donc souhaitable de tester les propriétés physiques du caoutchouc pour assurer sa qualité, sa reproductibilité et sa processabilité sur la ligne en aval de la fabrication des pneumatiques (par exemple, en réalisant des processus différents, y compris des processus d'extrusion). Les tests peuvent inclure ceux pour déterminer les propriétés rhéologiques, des propriétés visuelles et d'autres propriétés d'un matériau, de telles propriétés étant appréciées par l'homme de l'art comme caractérisant l'état de mélangeage du mélange de caoutchouc. Des variations inattendues dans les propriétés du caoutchouc peuvent nécessiter l'arrêt de la ligne de mélangeage et peuvent aussi impliquer les processus en amont de et/ou en aval de la ligne de mélangeage. Par conséquent, afin de maintenir le contrôle de qualité et de la productivité dans l'environnement de fabrication de mélange de caoutchouc, des échantillons de mélange de caoutchouc sont régulièrement testés.

Dans des processus d'échantillonnage connus, les échantillons peuvent être prélevés sur le caoutchouc cru qui est dans une forme de nappe ou de bande faite par une extrudeuse ou par une calandre à plusieurs cylindres. Plusieurs solutions ont été proposées par l'art antérieur pour prendre ces échantillons, y compris le document JP 2007-171117 (qui divulgue le passage d'une nappe de caoutchouc, en provenance d'une extrudeuse, entre une enclume et un couteau alternatif disposé dans l'enclume, le couteau avec un orifice dans lequel un échantillon du caoutchouc est pris sur l'abaissement du couteau sur la nappe et avec un vide qui saisit l'échantillon pour le transporter vers un dispositif de mesure de l'échantillon) ; et le document JPH05306975 (qui divulgue un dispositif de coupe d'un moyen de formation d'échantillon qui forme des échantillons en perforant une bande de caoutchouc tandis que la bande est transportée en continu immédiatement après que la bande est mise en forme). Dans ces configurations, il faut ralentir, presque jusqu'à un arrêt complet, le défilement de la bande de caoutchouc.

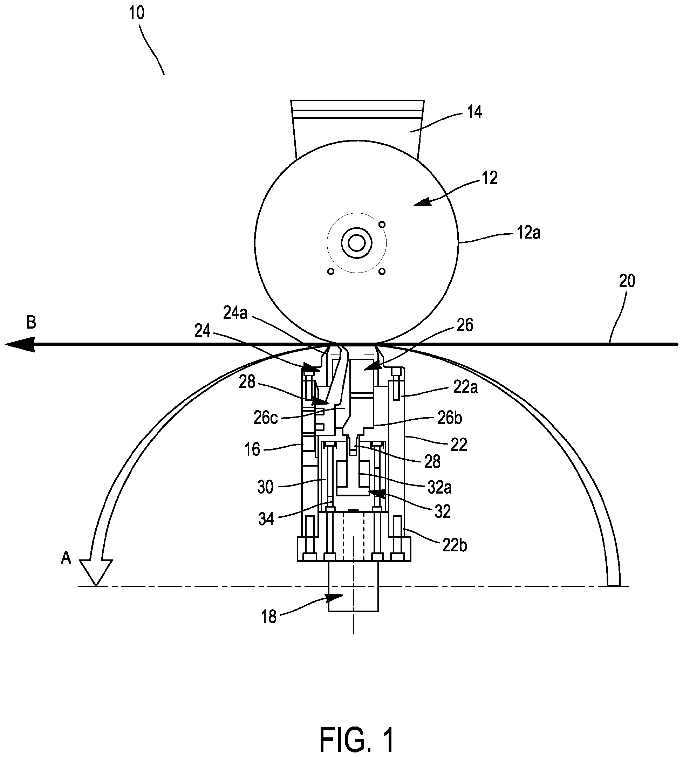

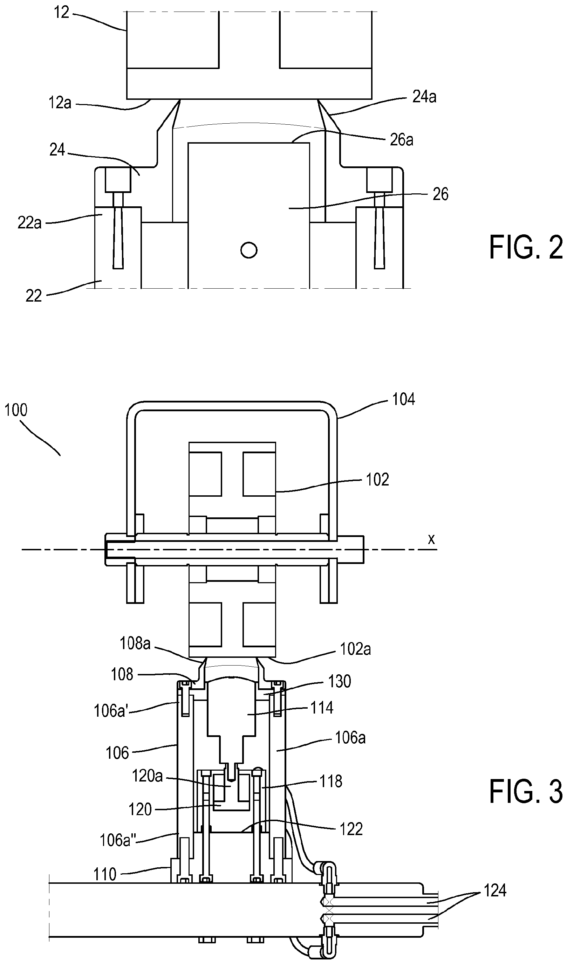

Dans un autre système connu, représenté dans les figures 1 et 2, un système automatique d'échantillonnage (ou « système ») 10 est fourni. Ce système n'implique pas l'arrêt du défilement d'une bande de caoutchouc pendant un cycle d'échantillonnage. Le système 10 inclut une enclume 12, qui est fixée de façon rotative par rapport à un support fixé 14, et un poinçon rotatif (ou « poinçon ») 16, qui est fixé de façon rotative par rapport à un arbre moteur 18 (voir la flèche A de la figure 1). L'enclume 12 inclut un cylindre d'un diamètre prédéterminé et avec une surface circonférentielle 12a qui engage une bande de caoutchouc 20 pendant son défilement le long d'un trajet entre l'enclume et le poinçon 16 (voir la flèche B de la figure 1).

Le poinçon 16 inclut un logement cylindrique 22 d'une longueur prédéterminée qui s'étend entre une extrémité d'échantillonnage 22a et une extrémité d'installation 22b opposée. Un emporte-pièce cylindrique connu (ou « couteau ») 24 avec une lame annulaire 24a est fourni à l'extrémité d'échantillonnage 22a du logement 22. La lame annulaire 24a a un diamètre prédéterminé pour perforer la bande de caoutchouc 20 et pour prendre des échantillons de la bande de caoutchouc pendant son défilement entre l'enclume 12 et le poinçon 16.

Le poinçon 16 inclut aussi un éjecteur alternatif (ou « éjecteur ») 26 qui est disposé à l'intérieur du poinçon. L'éjecteur 26 a une longueur prédéterminée entre une surface de dégagement 26a (voir la FIG. 2) et une surface de fixation 26b opposée. La surface de dégagement 26a est une surface plate pour dégager chaque échantillon de caoutchouc obtenu par l'emporte-pièce 24. La surface de fixation 26b inclut une fixation 28 comprenant un moyen de fixation connu (par exemple, vissage, soudage, collage et des moyens équivalents). L'éjecteur 26 inclut aussi un renfoncement allongé 26c dans lequel un crochet 28 est disposé pour que le crochet puisse s'engager dans chaque échantillon de caoutchouc simultanément avec l'échantillonnage de la bande de caoutchouc par l'emporte-pièce 26.

Le poinçon 16 inclut aussi un vérin à tige 30 constitué d'un vérin 32 avec une tige 32a et d'une chambre 34 dans laquelle le piston coulisse. Le vérin à tige 30 est choisi parmi des vérins de commerce. La tige 32a du vérin 32 comprend un dispositif de fixation connu qui correspond au moyen de fixation de la fixation 28, permettant de relier le vérin et l'éjecteur 26. Le vérin 32 est actionné par un fluide sous pression (par exemple, de l'air comprimé) en provenance d'un conduit (pas représenté). En conséquence, le mouvement du vérin 32 réalise le mouvement correspondant de l'éjecteur 26 entre une position d'attente (où le crochet 28 s'étend de la surface de dégagement 26a de l'éjecteur pour qu'il soit prêt à s'engager dans l'échantillon en même temps que l'échantillonnage de la bande de caoutchouc par l'emporte-pièce 24) et une position dégagée (où le crochet 28 ne s'engage plus dans l'échantillon pris dans la bande de caoutchouc 20 et l'échantillon est dégagée par l'éjecteur 26).

Cependant le système 10 ne garantit pas le dégagement de l'échantillon dans les cas où les échantillons collants restent collés sur la surface de dégagement 26a de l'éjecteur 26. En plus, des saletés qui passent entre l'emporte-pièce 24 et l'éjecteur 26 peuvent provoquer son blocage ou le fléchissement de la tige de vérin lors du retour à la position d'attente. Le guidage de l'éjecteur 26 peut donc engendrer des problèmes d'usure prématurée des joints au niveau de la tige 32a du vérin 32. La prise d'échantillons, en provenance des mélanges collants ou des bandes de faible épaisseur, est particulièrement problématique : le mouvement de l'éjecteur peut être bloqué en position sortie si des morceaux de caoutchouc viennent se coincer entre le crochet et l'éjecteur.

Ainsi aucun système actuel ne garantit un taux de réussite suffisant pour l'échantillonnage continu d'une bande de caoutchouc en défilement continu. En outre, aucun système actuel ne garantit un transfert d'échantillons assez efficace pour analyser les échantillons pris d'une bande de caoutchouc en défilement continu.

### RÉSUMÉ

L'invention concerne un système automatique d'échantillonnage pour prendre des échantillons d'une bande de caoutchouc après sa mise en forme et pendant son défilement dans un sens prédéterminé. Le système comprend une enclume avec un cylindre d'un diamètre prédéterminé et avec une surface circonférentielle qui s'engage dans la bande de caoutchouc pendant son défilement, l'enclume étant fixée de façon à ce qu'elle puisse tourner autour un axe de rotation. Le système comprend aussi un poinçon avec un logement cylindrique d'une longueur prédéterminée qui s'étend entre une extrémité d'échantillonnage et une extrémité d'installation opposée. Le poinçon comprend :
- un emporte-pièce fourni à l'extrémité d'échantillonnage pour perforer la bande de caoutchouc et pour obtenir des échantillons de la bande de caoutchouc pendant son défilement, l'emporte-pièce avec une lame annulaire d'un diamètre prédéterminé ;
- un élément de fixation et support fourni à l'extrémité d'installation pour réaliser l'installation du poinçon par rapport à un arbre moteur auquel le poinçon est fixé de façon rotative, le poinçon se tournant dans le même sens que le défilement de la bande de caoutchouc;
- un éjecteur disposé à l'intérieur du logement qui se déplace le long d'un axe longitudinal commun entre l'éjecteur, le logement et l'emporte-pièce, l'éjecteur comprenant une structure avec une longueur prédéterminée qui s'étend entre une extrémité de dégagement et une extrémité de fixation opposée, l'extrémité de dégagement comprenant une surface bombée caractérisée par une surface diminuée qui facilite le dégagement des échantillons, et l'extrémité de fixation comprenant une fixation ; et
- un vérin à tige constitué d'un piston avec une tige et d'une chambre dans laquelle le piston coulisse, la tige de vérin comprenant un dispositif de fixation permettant de relier le piston et l'éjecteur de sorte que le déplacement du piston dans la chambre sur alimentation d'un fluide sous pression réalise le déplacement correspondant de l'éjecteur entre une position d'attente et une position dégagée.

Dans certains modes de réalisation, l'éjecteur comprend en outre un renfoncement dans la structure et dans lequel un crochet fixé est disposé de manière à ce que le crochet s'étende de la surface bombée où l'éjecteur est dans la position d'attente, et de manière à ce que chaque échantillon soit dégagé par l'éjecteur où l'éjecteur est dans la position dégagée.

Dans certains modes de réalisation, le crochet inclut un bras avec une surface inclinée qui s'engage une surface inclinée correspondante du renfoncement pour permettre un mouvement complémentaire de l'éjecteur par rapport au crochet fixé. Il existe quelques modes de réalisation dans lequel le bras a une extrémité d'engagement auquel un hameçon est fourni qui inclut une ou plusieurs cannelures pour que le crochet puisse s'engager dans des échantillons pris de la bande de caoutchouc simultanément avec leur échantillonnage par l'emporte-pièce.

Dans certains modes de réalisation, le poinçon comprend en outre une bague de guidage avec une ouverture, la bague de guidage étant disposée à l'extrémité d'échantillonnage du logement le long de l'axe longitudinal commun entre le logement, l'emporte-pièce et l'éjecteur pour permettre le guidage de l'éjecteur entre la position d'attente et la position dégagée.

Dans certains modes de réalisation, l'élément de fixation et support inclut deux ou plusieurs conduits en communication fluidique avec des conduits correspondants qui alimentent le vérin à tige avec un fluide sous pression.

L'invention concerne aussi un procédé automatisé d'échantillonnage d'une bande de caoutchouc en défilement dans un sens prédéterminé. Le procédé comprend les phases suivantes :
- une première phase du procédé comprenant les étapes suivantes :
   o l'étape de mise en forme de la bande de caoutchouc d'une épaisseur prédéterminée ;
   ∘ l'étape de diriger la bande de caoutchouc, après sa mise en forme, vers un système automatique d'échantillonnage divulgué de manière à passer entre l'enclume et le poinçon ;
   ∘ l'étape de rotation du poinçon dans le même sens que le défilement de la bande de caoutchouc avec l'éjecteur dans une position d'attente ;
- une deuxième phase du procédé comprenant les étapes suivantes :
   ∘ l'étape d'échantillonnage de la bande de caoutchouc par l'emporte-pièce avec l'éjecteur restant dans la position d'attente et le crochet s'engageant dans la bande de caoutchouc simultanément avec une rotation continue du poinçon ; et
   ∘ l'étape de la prise d'un échantillon par l'emporte-pièce ;
- une troisième phase du procédé comprenant l'étape suivante :
   ∘ l'étape d'engagement de l'échantillon pris pendant la deuxième phase, avec l'éjecteur restant dans la position d'attente et avec le crochet sécurisant la prise de l'échantillon tandis que le poinçon tourne vers une position basse;
- et une quatrième phase du procédé comprenant les étapes suivantes :
   ∘ l'étape d'alimentation du vérin à tige avec un fluide sous pression pour réaliser le déplacement correspondant de l'éjecteur de la position d'attente vers la position dégagée, cette étape étant réalisée simultanément avec la rotation continue du poinçon vers la position basse; et
   ∘ l'étape de dégagement de l'échantillon de la surface bombée vers un moyen de récupération.

Dans certains modes de réalisation, le procédé comprend en outre l'étape de l'entraînement du système pour reconnaître au moins une parmi la meilleure taille et la meilleure fréquence pour faire l'échantillonnage de la bande de caoutchouc.

Dans certains modes de réalisation, le procédé comprend en outre une classification d'échantillons générés par moyens d'auto-apprentissage.

D'autres aspects de l'invention vont devenir évidents grâce à la description détaillée suivante.

### BRÈVE DESCRIPTION DES DESSINS

La nature et les divers avantages de l'invention vont devenir plus évidents à la lecture de la description détaillée qui suit, conjointement avec les dessins annexés, sur lesquels les mêmes numéros de référence désignent partout des parties identiques, et dans lesquels :
La figure 1 représente une vue frontale en coupe, et la figure 2 représente une vue en coupe partielle, d'un système automatique d'échantillonnage connu.
La figure 3 représente une vue latérale en coupe, d'un système automatique d'échantillonnage de l'invention.
La figure 4 représente une vue en coupe d'un poinçon du système de la figure 2.
La figure 5 représente une vue en perspective d'un éjecteur du poinçon de la figure 3.
La figure 6 représente une vue partielle d'un emporte-pièce et d'une bague de guidage du poinçon de la figure 4 engagée contre une enclume du système de la figure 2.
Les figures 7 et 8 représentent des vues en coupe partielle des modes de réalisation d'un crochet du poinçon de la figure 4.
La figure 9 représente une vue latérale en coupe du système de la figure 3 en communication avec des conduits d'alimentation d'un fluide sous pression.
La figure 10 représente un mode de réalisation d'un procédé réalisé par le système de l'invention.

### DESCRIPTION DÉTAILLÉE

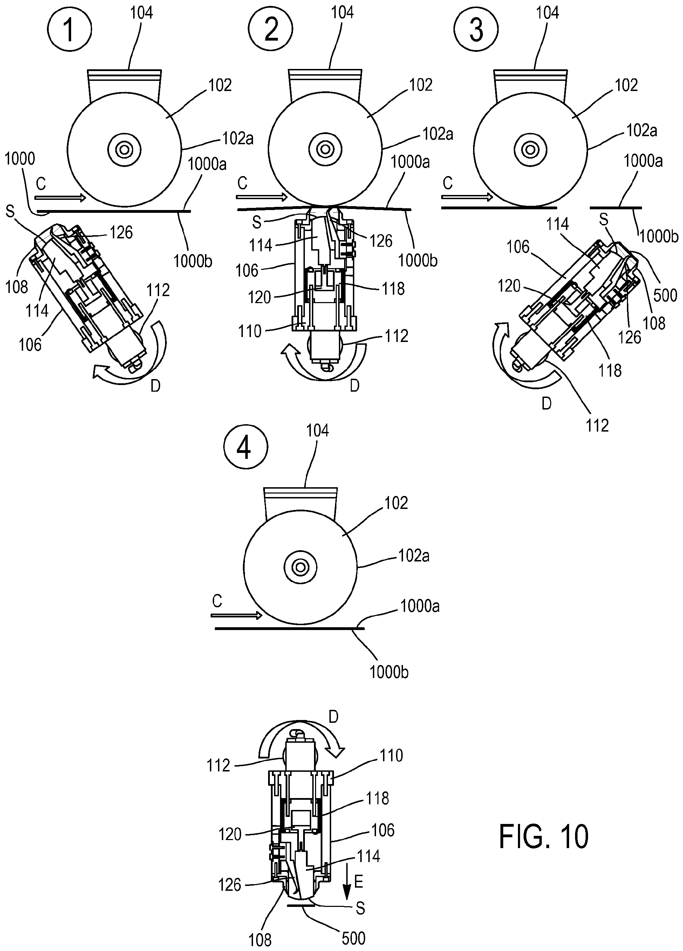

En se référant maintenant aux figures 3 à 10, sur lesquelles les mêmes numéros identifient des éléments identiques, un mode de réalisation est représenté d'un système automatique d'échantillonnage (ou « système ») 100. Dans des processus d'échantillonnage réalisés par le système 100, les échantillons sont obtenus en perforant un caoutchouc cru en forme d'une nappe ou d'une bande de caoutchouc 1000 (voir la FIG. 10) mise en forme par une extrudeuse ou par une calandre à plusieurs cylindres (pas-représentée). La bande de caoutchouc 1000 est mise en forme avec une surface supérieure 1000a, une surface antérieure 1000b opposée et une épaisseur prédéterminée entre les deux surfaces (voir la figure 10). Le système 100 prend les échantillons de la bande de caoutchouc 1000 immédiatement après sa mise en forme dans une ligne de mélangeage, et pendant son défilement dans un sens prédéterminé (voir la flèche C de la figure 10). Comme utilisé ici, les termes « nappe », « bande », « feuille » et leurs équivalents connus sont interchangeables.

En se référant aux figures 3 à 6, le système 100 inclut une enclume 102 comprenant un cylindre d'un diamètre prédéterminé et avec une surface circonférentielle 102a qui s'engage dans la surface supérieure 1000a de la bande de caoutchouc pendant son défilement (voir la figure 10). L'enclume 102 est fixée de façon rotative (par exemple, par rapport à un support fixé 104) pour qu'elle puisse tourner autour un axe de rotation X.

Le système 100 comprend en outre un poinçon rotatif (ou « poinçon ») 106 avec un logement cylindrique (ou « logement ») 106a d'une longueur prédéterminée qui s'étend entre une extrémité d'échantillonnage 106a' et une extrémité d'installation 106a" opposée. Un emporte-pièce (ou « couteau ») 108 est fourni à l'extrémité d'échantillonnage 106a' du logement 106a pour perforer la bande de caoutchouc 1000 et pour obtenir des échantillons de la bande de caoutchouc pendant son défilement entre l'enclume 102 et le poinçon 106. L'emporte-pièce 108 inclut une lame annulaire 108a d'un diamètre prédéterminé qui est modifiable en fonction de la taille souhaitée de l'échantillon. Un élément de fixation et support 110 est fourni à l'extrémité d'installation 106a" pour réaliser l'installation fiable du poinçon 106 par rapport à un arbre moteur 112 auquel le poinçon est fixé de façon rotative (voir la figure 10). Le poinçon 106 tourne autour d'un axe de rotation du moteur 112 dans le même sens que le défilement de la bande de caoutchouc 1000. Le poinçon 106 est donc capable de tourner soit dans le sens des aiguilles d'une montre (voir la flèche D de la figure 10) soit dans le sens inverse.

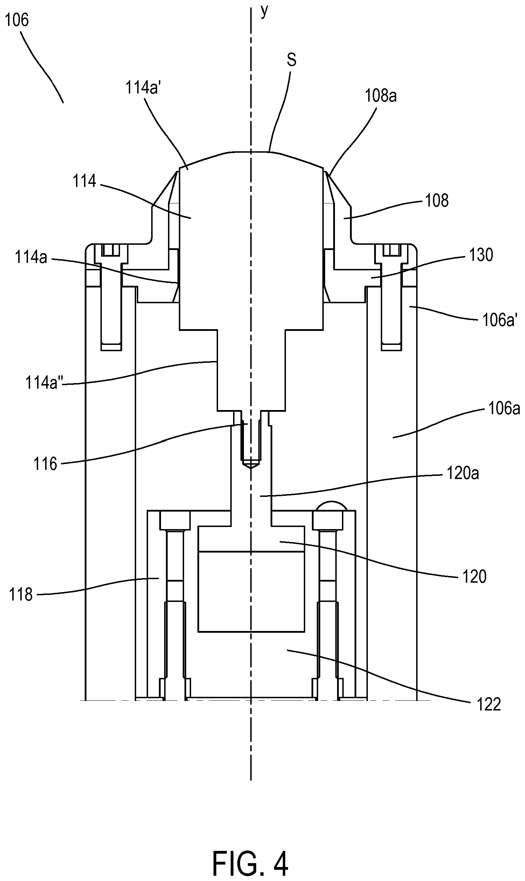

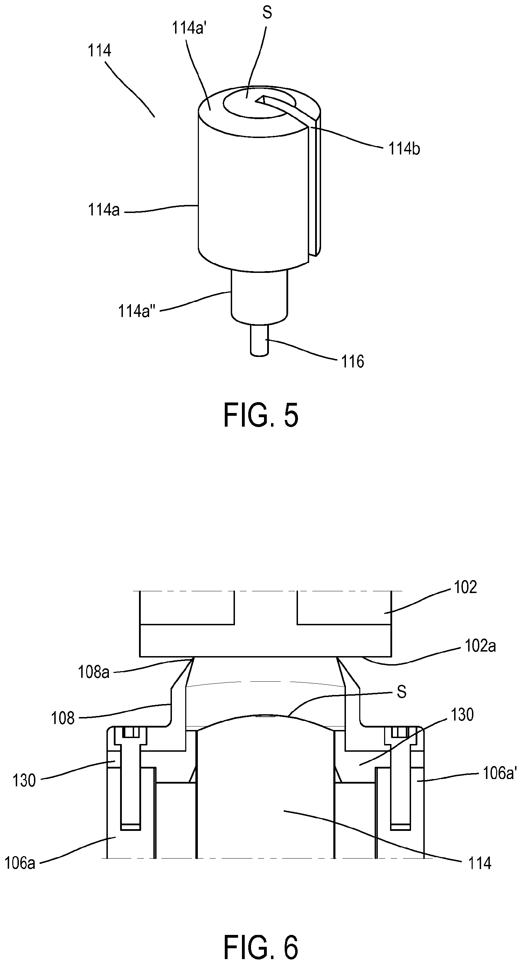

Un éjecteur alternatif (ou « éjecteur ») 114 est disposé à l'intérieur du logement 106a le long d'un axe longitudinal commun Y entre l'éjecteur, le logement et l'emporte-pièce 108. L'éjecteur 114 se déplace le long de l'axe longitudinal commun Y à l'intérieur du logement 106a et, pendant des cycles d'échantillonnage, à l'intérieur de l'emporte-pièce 108 (voir la figure 4). L'éjecteur 114 comprend une structure 114a avec une longueur prédéterminée qui s'étend entre une extrémité de dégagement 114a' et une extrémité de fixation 114a" opposée. L'extrémité de fixation 114a" inclut une fixation 116 comprenant un moyen de fixation connu (par exemple, vissage, soudage, collage, et des moyens équivalents). L'extrémité de dégagement 114a' comprend une surface bombée S qui est caractérisée par une surface diminuée en contact avec chaque échantillon pris par l'emporte-pièce 108 (voir la FIG. 5). La surface bombée S facilite le dégagement de chaque échantillon en le faisant se replier sur lui-même, cela résout les problèmes de collage lors de dégagement de l'échantillon.

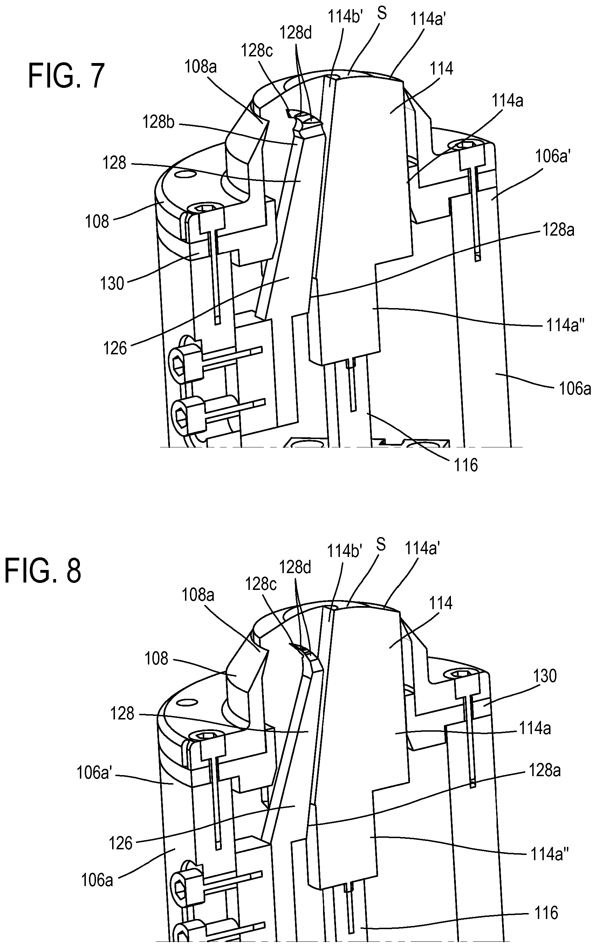

En se référant encore aux figures 3 à 6 et en outre aux figures 7 à 9, l'éjecteur 114 comprend un renfoncement allongée (ou « renfoncement ») 114b dans la structure 114a. Un crochet 126 est disposé dans le renfoncement 114b, et le crochet inclut un bras 128 d'un matériau de type acier à ressort. Le crochet 126 est fixé au logement 106a pour que le crochet puisse s'engager dans chaque échantillon pris dans la bande de caoutchouc simultanément avec son échantillonnage par l'emporte-pièce 108. Le bras 128 du crochet 126 inclut une surface inclinée 128a qui s'engage dans une surface inclinée correspondante 114b' du renfoncement 114b où l'éjecteur 114 prend une position dégagée (décrite en dessous). Il existe un espace entre les surfaces inclinées pour permettre un mouvement complémentaire de l'éjecteur 114 par rapport au crochet fixé.

Le bras 128 a une extrémité d'engagement 128b formant un hameçon 128c. L'hameçon 128c peut inclure un ou plusieurs usinages supplémentaires y compris une ou plusieurs cannelures 128d afin d'optimiser la capture de l'échantillon. Il est entendu que l'hameçon 128c peut être modifiée en fonction des caractéristiques de l'éjecteur 106 (par exemple, sa longueur, la profondeur du renfoncement 114b, etc.) et en fonction des caractéristiques du caoutchouc (par exemple, sa viscosité, son épaisseur, etc.). Le système 100 peut inclure plusieurs modes de réalisation de crochet 126 (par exemple, dans un kit) pour réaliser les cycles d'échantillonnage divers.

En se référant encore aux figures 3 à 9, le poinçon 106 inclut en outre un vérin à tige 118 constitué d'un piston 120 avec une tige 120a et d'une chambre 122 dans laquelle le piston coulisse. Le vérin à tige 118 est choisi parmi des vérins de commerce. La tige 120a de piston 120 comprend un dispositif de fixation connu qui correspond au moyen de fixation de la fixation 116 de l'éjecteur 114, permettant de relier le piston et l'éjecteur.

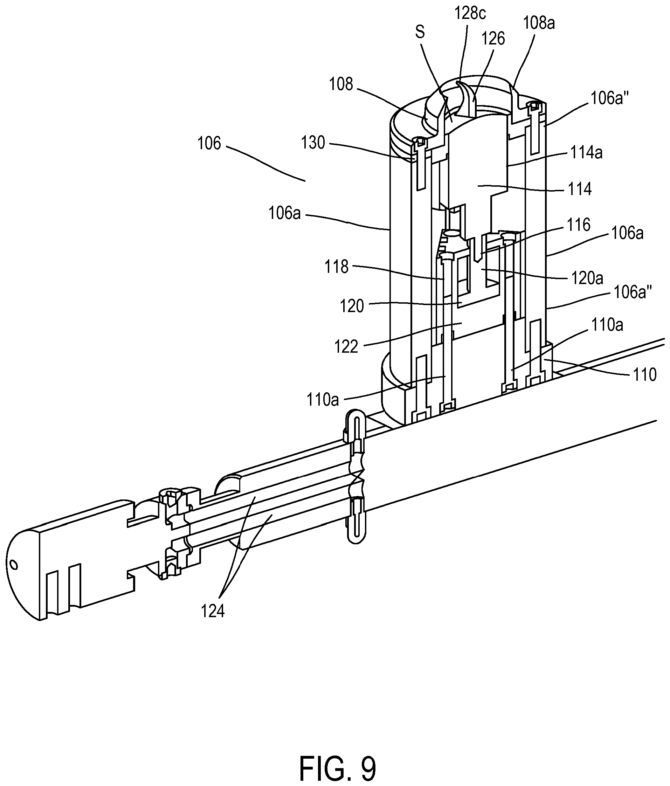

Le piston 120 se déplace en mouvement alternatif dans la chambre 122 grâce à l'alimentation d'un fluide sous pression (par exemple, de l'air comprimé). L'élément de fixation et support 110 inclut deux ou plusieurs conduits (pas représentés) en communication fluidique avec des conduits correspondants 124 qui alimentent le vérin à tige 118 pendant des cycles d'échantillonnage (voir la figure 3 et aussi la figure 9). Le mouvement du piston 120 réalise le mouvement correspondant de l'éjecteur 114 le long de l'axe longitudinal commun Y. En conséquence, l'éjecteur 114 se déplace entre une position d'attente (où le crochet 126 s'étend de la surface bombée S de l'éjecteur 114 pour qu'il soit prêt à s'engager dans un échantillon en même temps que l'échantillonnage d'une bande de caoutchouc par l'emporte-pièce 108) et une position dégagée (où le crochet 126 ne s'engage plus dans l'échantillon pris dans la bande de caoutchouc et l'échantillon est dégagée par l'éjecteur 114 vers un moyen de récupération).

Dans la position d'attente de l'éjecteur 114 (montrée dans les figures 3, 6 et 9 et aussi dans les première, deuxième et troisième phases respectives 1, 2, 3 de la figure 10), le crochet 126 s'étend de la surface bombée S de l'éjecteur pour qu'il soit prêt à s'engager dans la surface antérieure 1000b de la bande de caoutchouc 1000 simultanément avec son échantillonnage par l'emporte-pièce 108 (voir la phase 2 de la figure 10). Dans la position dégagée de l'éjecteur 114 (montrée dans les figures 4, 7 et 8 et aussi par la phase 4 de la figure 10), le déplacement de l'éjecteur amène la surface inclinée 114b' du renfoncement 114b le long de la surface inclinée correspondante 128a du bras 128. En conséquence, l'hameçon 128c du bras 128 est soulevé de la surface antérieure 1000b de la bande de caoutchouc 1000, et l'échantillon est retenu sur la surface bombée S de l'éjecteur 114.

En se référant encore aux figures 4 et 6 à 8, le poinçon 106 comprend en outre une bague de guidage 130 avec une ouverture qui est traversée par l'éjecteur 114 pendant les cycles d'échantillonnage. La bague de guidage 130 est disposée à l'extrémité d'échantillonnage 106a' du logement 106a le long d'un axe longitudinal commun entre le logement, la bague de guidage, l'emporte-pièce 108 et l'éjecteur 114. La bague de guidage 130 permet le guidage de l'éjecteur 114 entre la position d'attente (où l'éjecteur reste dans le logement 106) et la position dégagée (où l'éjecteur 114 traverse l'ouverture 130a et l'intérieur de l'emporte-pièce 108 pendant les cycles d'échantillonnage). La bague de guidage 130 évite aussi que des saletés provoquent le blocage de l'éjecteur 114 et l'accumulation dans l'logement 106a du poinçon 106.

En se référant à la figure 10, un mode de réalisation d'un procédé est donné qui utilise le système 100 décrit au-dessus par rapport aux figures 2 à 9.

Dans un mode de réalisation du procédé de l'invention, pendant une première phase du procédé (voir la phase 1 de la figure 10), le procédé comprend une étape de mise en forme de la bande de caoutchouc 1000 d'une épaisseur prédéterminée entre la surface supérieure 1000a et la surface antérieure 1000b de la bande de caoutchouc (par exemple, à partir d'une extrudeuse connue ou d'une calandre connue) (pas représentée). Après sa mise en forme, la bande de caoutchouc 1000 est mise en défilement et elle est dirigée vers le système 100 de manière à passer entre l'enclume 102 et le poinçon 106 (voir la flèche C). Le poinçon 106 est lancé en rotation dans le même sens que le défilement de la bande de caoutchouc 1000 avec l'éjecteur 114 dans la position d'attente.

Pendant une deuxième phase du procédé (voir la phase 2 de la figure 10), en fonction de la rotation du poinçon 106, le procédé comprend une étape d'échantillonnage. Cette étape comprend l'étape de soulever la bande de caoutchouc 1000 pour qu'elle soit engagée à sa surface antérieure 1000b dans l'emporte-pièce 108. Pendant cette étape, avec l'éjecteur 114 restant dans la position d'attente, le crochet 126 s'engage dans la bande de caoutchouc 1000 simultanément avec la rotation continue du poinçon 106. En outre, l'emporte-pièce 108, en s'engageant dans la surface antérieure 1000b de la bande de caoutchouc 1000, presse la bande de caoutchouc 1000 contre la surface circonférentielle 102a de l'enclume 102. Sous l'effort de cette pression, la bande de caoutchouc 1000 est poussée dans l'emporte-pièce 108 pour qu'un échantillon soit retenu captif par l'emporte-pièce.

Pendant une troisième phase du procédé (voir la phase 3 de la figure 10), le procédé comprend une étape d'engagement d'un échantillon 500, obtenu pendant l'étape précédente. Pendant cette étape, l'éjecteur 114 reste dans la position d'attente. Pendant cette étape, le crochet 126 sécurise la prise de l'échantillon 500 tandis que le poinçon 106 se tourne vers une position basse (représentée par la phase 4 de la figure 10).

Pendant une quatrième phase du procédé (voir la phase 4 de la figure 10), un fluide sous pression (par exemple, de l'air comprimé) est fourni au vérin à tige 118 pour que le piston 120 se déplace dans la chambre 122 alimentée en pression. Ce déplacement, réalisé simultanément avec la rotation continue du poinçon 106 vers la position basse, réalise aussi le déplacement correspondant de l'éjecteur 114. Pendant cette étape, la bague de guidage 130 guide l'éjecteur 114 de la position d'attente à l'intérieur du logement 106a vers la position dégagée à l'intérieur de l'emporte-pièce 108 (voir la flèche E de la figure 10). En conséquence, la surface inclinée 128a du bras 128 du crochet 126 s'engage dans la surface inclinée 114b' du renfoncement 114b, et le crochet 126 ne s'engage plus dans l'échantillon 500. A la position basse, l'éjecteur 114 dégage l'échantillon 500 de la surface bombée S vers un moyen de récupération (par exemple, un tapis ou un convoyeur) (pas représenté). Le moyen de récupération transport tous les échantillons vers un laboratoire pour faire les analyses requis.

La bande de caoutchouc 1000 reste en défilement jusqu'à la fin du cycle du procédé d'échantillonnage. Pendant chaque cycle, le poinçon 106 peut faire plusieurs rotations en fonction du nombre d'échantillons prévus pour le cycle.

Un cycle du procédé d'échantillonnage peut être fait par la commande du PLC et peut inclure des pré-programmations des informations de gestion. Par exemple, un profil peut être associé à chaque bande de caoutchouc mise en forme, caractérisé par le nombre d'échantillons prévus pendant un cycle d'échantillonnage programmé, la taille des échantillons devant être pris, la fréquence d'échantillonnage, et la réception et l'envoi de données indiquant le transfert de l'échantillon pour l'analyser. Le PLC contrôle la liste des échantillons commandés, et il fait comparer cette liste avec les échantillons pris.

Pour toutes les réalisations, un système de surveillance pourrait être mis en place. Si l'analyse des échantillons montrent des variations inattendues dans les propriétés du caoutchouc, le système de surveillance peut arrêter la ligne de mélangeage dans laquelle la bande de caoutchouc 1000 est mise en forme et/ou le système 100. Au moins une partie du système de surveillance peut être fournie dans un dispositif portable telle qu'un dispositif de réseau mobile (par exemple, un téléphone mobile, un ordinateur portable, un dispositif portable connecté au réseau, des vêtements portables connectés au réseau et/ou toutes combinaisons et/ou tous équivalents).

Dans des modes de réalisation de l'invention, le système 100 peut recevoir des commandes vocales ou d'autres données audio représentant une demande d'échantillons et/ou le statut actuel des échantillons de l'analyse. La demande peut inclure une demande pour l'état actuel d'un cycle d'échantillonnage. Une réponse générée peut être représentée de manière audible, visuelle, tactile (par exemple, en utilisant une interface haptique) et/ou virtuelle.

Dans un mode de réalisation, le procédé peut comprendre une étape d'entraînement du système 100 pour reconnaître la meilleure taille et/ou la meilleure fréquence pour faire l'échantillonnage de la bande de caoutchouc. L'étape de l'entraînement inclut une classification d'échantillons générés par moyens d'auto-apprentissage. Cette classification peut inclure, sans limitation, les paramètres des bandes desquelles les échantillons sont obtenus (par exemple, ses épaisseurs, ses longueurs, ses recettes de caoutchouc, etc.), les paramètres des échantillons (par exemple, leur épaisseurs, leurs diamètres, le nombre d'échantillons obtenus, etc.) et les durées des cycles d'échantillonnage.

Les termes « au moins un(e) » et « un(e) ou plusieurs» sont utilisés de manière interchangeable. Les gammes qui sont présentées comme se situant « entre a et b » englobent les valeurs « a » et « b ».

## Revendications

1. Système automatique d'échantillonnage (100) pour prendre des échantillons d'une bande de caoutchouc (1000) après sa mise en forme et pendant son défilement dans un sens prédéterminé, le système (100) comprenant :
une enclume (102) comprenant un cylindre d'un diamètre prédéterminé et avec une surface circonférentielle (102a) qui s'engage dans la bande de caoutchouc pendant son défilement, l'enclume étant fixée de façon à ce qu'elle puisse tourner autour un axe de rotation (X) ; et
un poinçon (106) avec un logement cylindrique (106a) d'une longueur prédéterminée qui s'étend entre une extrémité d'échantillonnage (106a') et une extrémité d'installation (106a") opposée, le poinçon comprenant :
un emporte-pièce (108) fourni à l'extrémité d'échantillonnage pour perforer la bande de caoutchouc et pour obtenir des échantillons (500) de la bande de caoutchouc pendant son défilement, l'emporte-pièce avec une lame annulaire (108a) d'un diamètre prédéterminé ;
un élément de fixation et support (110) fourni à l'extrémité d'installation pour réaliser l'installation du poinçon (106) par rapport à un arbre moteur (112) auquel le poinçon est fixé de façon rotative, le poinçon se tournant dans le même sens que le défilement de la bande de caoutchouc,
un éjecteur (114) disposé à l'intérieur du logement (106a) qui se déplace le long d'un axe longitudinal commun (Y) entre l'éjecteur, le logement et l'emporte-pièce, l'éjecteur comprenant une structure (114a) avec une longueur prédéterminée qui s'étend entre une extrémité de dégagement (114a') et une extrémité de fixation (114a") opposée, et l'extrémité de fixation comprenant une fixation (116) ; et
un vérin à tige (118) constitué d'un piston (120) avec une tige (120a) et d'une chambre (122) dans laquelle le piston coulisse, la tige de vérin comprenant un dispositif de fixation permettant de relier le piston et l'éjecteur (114) de sorte que le déplacement du piston dans la chambre sur alimentation d'un fluide sous pression réalise le déplacement correspondant de l'éjecteur entre une position d'attente et une position dégagée,
**caractérisé en ce que** l'extrémité de dégagement comprenant une surface bombée (S) qui facilite le dégagement des échantillons.

2. Système de la revendication 1, dans lequel l'éjecteur comprend en outre un renfoncement (114b) dans la structure (114a) dans lequel un crochet (126) est disposé de manière à ce que le crochet s'étende de la surface bombée (S) où l'éjecteur est dans la position d'attente, et de manière à ce que chaque échantillon (500) soit dégagé par l'éjecteur où l'éjecteur est dans la position dégagée.

3. Système de la revendication 2, dans lequel le crochet inclut un bras (128) avec une surface inclinée (128a) qui s'engage une surface inclinée correspondante (114b') du renfoncement (114b) pour permettre un mouvement complémentaire de l'éjecteur 114 par rapport au crochet fixé.

4. Système de la revendication 3, dans lequel le bras a une extrémité d'engagement (128b) auquel un hameçon (128c) est fourni qui inclut une ou plusieurs cannelures (128d) pour que le crochet puisse s'engager dans des échantillons pris de la bande de caoutchouc simultanément avec leur échantillonnage par l'emporte-pièce (108).

5. Système de l'une quelconque des revendications précédentes, dans lequel le poinçon comprend en outre une bague de guidage (130) avec une ouverture (130a), la bague de guidage étant disposée à l'extrémité d'échantillonnage du logement (106a) le long de l'axe longitudinal commun entre le logement, l'emporte-pièce et l'éjecteur pour permettre le guidage de l'éjecteur entre la position d'attente et la position dégagée.

6. Système de l'une quelconque des revendications précédentes, dans lequel l'élément de fixation et support inclut deux ou plusieurs conduits en communication fluidique avec des conduits (124) correspondants qui alimentent le vérin à tige avec un fluide sous pression.

7. Procédé automatisé d'échantillonnage d'une bande de caoutchouc (1000) en défilement dans un sens prédéterminé, le procédé comprenant les phases suivantes :
une première phase du procédé comprenant les étapes suivantes :
l'étape de mise en forme de la bande de caoutchouc d'une épaisseur prédéterminée ;
l'étape de diriger la bande de caoutchouc, après sa mise en forme, vers un système automatique d'échantillonnage de l'une quelconque des revendications 1 à 6 de manière à passer entre l'enclume (102) et le poinçon (106) ;
l'étape de rotation du poinçon dans le même sens que le défilement de la bande de caoutchouc avec l'éjecteur dans une position d'attente ;
une deuxième phase du procédé comprenant les étapes suivantes :
l'étape d'échantillonnage de la bande de caoutchouc par l'emporte-pièce (108) avec l'éjecteur restant dans la position d'attente et le crochet (126) s'engageant dans la bande de caoutchouc simultanément avec une rotation continue du poinçon ; et
l'étape de la prise d'un échantillon (500) par l'emporte-pièce ;
une troisième phase du procédé comprenant l'étape suivante :
l'étape d'engagement de l'échantillon pris pendant la deuxième phase, avec l'éjecteur restant dans la position d'attente et avec le crochet sécurisant la prise de l'échantillon tandis que le poinçon tourne vers une position basse ;
et une quatrième phase du procédé comprenant les étapes suivantes :
l'étape d'alimentation du vérin à tige (118) avec un fluide sous pression pour réaliser le déplacement correspondant de l'éjecteur (114) de la position d'attente vers la position dégagée, cette étape étant réalisée simultanément avec la rotation continue du poinçon vers la position basse; et
l'étape de dégagement de l'échantillon de la surface bombée (S) vers un moyen de récupération.

8. Procédé de la revendication 7, comprenant en outre l'étape de l'entraînement du système (100) pour reconnaître au moins une parmi la meilleure taille et la meilleure fréquence pour faire l'échantillonnage de la bande de caoutchouc.

9. Procédé de la revendication 7 ou de la revendication 8, comprenant en outre une classification d'échantillons générés par moyens d'auto-apprentissage.

## Patentansprüche

1. Automatisches Probenentnahmesystem (100) zum Entnehmen von Proben einer Gummibahn (1000) nach ihrer Formung und während ihres Transports in einer vorbestimmten Richtung, wobei das System (100) Folgendes umfasst:
einen Amboss (102), der einen Zylinder mit einem vorbestimmten Durchmesser und mit einer Umfangsfläche (102a) umfasst, die mit der Gummibahn während ihres Transports in Eingriff kommt, wobei der Amboss so befestigt ist, dass er sich um eine Drehachse (X) drehen kann; und
einen Stempel (106) mit einer zylindrischen Aufnahme (106a) mit einer vorbestimmten Länge, die sich zwischen einem Probenentnahmeende (106a') und einem gegenüberliegenden Installationsende (106a") erstreckt, wobei der Stempel Folgendes umfasst:
ein Stanzwerkzeug (108), das am Probenentnahmeende bereitgestellt ist, um die Gummibahn zu perforieren und Proben (500) der Gummibahn während ihres Transports zu erhalten, wobei das Stanzwerkzeug eine ringförmige Klinge (108a) mit einem vorbestimmten Durchmesser aufweist;
ein Befestigungs- und Stützelement (110), das am Installationsende bereitgestellt ist, um die Installation des Stempels (106) in Bezug auf eine Antriebswelle (112), an der der Stempel drehbar befestig ist, zu bewirken, wobei sich der Stempel in derselben Richtung wie der Transportrichtung der Gummibahn dreht;
einen Auswerfer (114), der innerhalb der Aufnahme (106a) angeordnet ist und sich entlang einer gemeinsamen Längsachse (Y) zwischen dem Auswerfer, der Aufnahme und dem Stanzwerkzeug bewegt, wobei der Auswerfer eine Struktur (114a) mit einer vorbestimmten Länge umfasst, die sich zwischen einem Freigabeende (114a') und einem gegenüberliegenden Befestigungsende (114a") erstreckt, und wobei das Befestigungsende eine Befestigung (116) umfasst; und
einen Kolbenstangenzylinder (118), der aus einem Kolben (120) mit einer Kolbenstange (120a) und einer Kammer (122), in der der Kolben gleitet, gebildet ist, wobei die Kolbenstange des Zylinders eine Befestigungsvorrichtung umfasst, die es ermöglicht, den Kolben und den Auswerfer (114) so zu verbinden, dass die Bewegung des Kolbens in der Kammer bei Zufuhr eines unter Druck stehenden Fluids die entsprechende Bewegung des Auswerfers zwischen einer Bereitschaftsposition und einer Freigabeposition bewirkt,
**dadurch gekennzeichnet, dass** das Freigabeende eine gewölbte Oberfläche (S) umfasst, die das Freigeben der Proben erleichtert.

2. System nach Anspruch 1, wobei der Auswerfer ferner eine Vertiefung (114b) in der Struktur (114a) umfasst, in der ein Greifer (126) so angeordnet ist, dass sich der Greifer von der gewölbten Oberfläche (S) aus erstreckt, wenn sich der Auswerfer in der Bereitschaftsposition befindet, und so, dass jede Probe (500) durch den Auswerfer freigegeben wird, wenn sich der Auswerfer in der Freigabeposition befindet.

3. System nach Anspruch 2, wobei der Greifer einen Arm (128) mit einer geneigten Oberfläche (128a) umfasst, die mit einer entsprechenden geneigten Oberfläche (114b') der Vertiefung (114b) in Eingriff steht, um eine komplementäre Bewegung des Auswerfers (114) in Bezug auf den befestigten Greifer zu ermöglichen.

4. System nach Anspruch 3, wobei der Arm ein Eingriffsende (128b) aufweist, an dem ein Haken (128c) bereitgestellt ist, der eine oder mehrere Rillen (128d) enthält, damit der Greifer in die von der Gummibahn entnommenen Proben gleichzeitig mit ihrer Probenentnahme durch das Stanzwerkzeug (108) eingreifen kann.

5. System nach einem der vorangehenden Ansprüche, wobei der Stempel ferner einen Führungsring (130) mit einer Öffnung (130a) umfasst, wobei der Führungsring am Probenentnahmeende der Aufnahme (106a) entlang der gemeinsamen Längsachse zwischen der Aufnahme, dem Stanzwerkzeug und dem Auswerfer angeordnet ist, um eine Führung des Auswerfers zwischen der Bereitschaftsposition und der Freigabeposition zu ermöglichen.

6. System nach einem der vorangehenden Ansprüche, wobei das Befestigungs- und Stützelement zwei oder mehr Leitungen einschließt, die mit entsprechenden Leitungen (124), die den Kolbenstangenzylinder mit einem unter Druck stehenden Fluid versorgen, in Fluidverbindung stehen.

7. Automatisiertes Verfahren zur Probenentnahme einer in einer vorbestimmten Richtung transportierten Gummibahn (1000), wobei das Verfahren die folgenden Phasen umfasst:
eine erste Verfahrensphase, die die folgenden Schritte umfasst:
den Schritt des Formens der Gummibahn mit einer vorbestimmten Dicke;
den Schritt des Führens der Gummibahn nach ihrer Formung zu einem automatischen Probenentnahmesystem nach einem der Ansprüche 1 bis 6, sodass es zwischen dem Amboss (102) und dem Stempel (106) hindurchläuft;
den Schritt des Drehens des Stempels in derselben Richtung wie der Transportrichtung der Gummibahn mit dem Auswerfer in einer Bereitschaftsposition;
eine zweite Verfahrensphase, die die folgenden Schritte umfasst:
den Schritt der Probenentnahme der Gummibahn durch das Stanzwerkzeug (108), wobei der Auswerfer in der Bereitschaftsposition verbleibt und der Greifer (126) gleichzeitig mit der kontinuierlichen Drehung des Stempels in die Gummibahn eingreift; und
den Schritt des Entnehmens einer Probe (500) durch das Stanzwerkzeug;
eine dritte Verfahrensphase, die den folgenden Schritt umfasst:
den Schritt des Eingreifens der in der zweiten Phase entnommenen Probe, wobei der Auswerfer in der Bereitschaftsposition verbleibt und der Greifer die Entnahme der Probe sichert, während sich der Stempel in eine untere Position dreht;
und eine vierte Verfahrensphase, die die folgenden Schritte umfasst:
den Schritt des Versorgens des Kolbenstangenzylinders (118) mit einem unter Druck stehenden Fluid, um die entsprechende Bewegung des Auswerfers (114) aus der Bereitschaftsposition in die Freigabeposition zu bewirken, wobei dieser Schritt gleichzeitig mit der kontinuierlichen Bewegung des Stempels in die untere Position durchgeführt wird; und
den Schritt des Freigebens der Probe von der gewölbten Oberfläche (S) in ein Aufnahmemittel.

8. Verfahren nach Anspruch 7, ferner umfassend den Schritt des Trainierens des Systems (100), damit dieses mindestens eine beste Größe und/oder beste Frequenz zur Durchführung der Probenentnahme der Gummibahn erkennt.

9. Verfahren nach Anspruch 7 oder Anspruch 8, ferner umfassend eine Klassifizierung von durch selbstlernende Mittel erzeugten Proben.

## Claims

1. An automatic sampling system (100) for taking samples from a rubber strip (1000) after it has been shaped and while it is moving in a predetermined direction, the system (100) comprising:
an anvil (102) comprising a cylinder of a predetermined diameter and with a circumferential surface (102a) that engages the rubber strip during its movement, the anvil being fixed so that it is rotatable about an axis of rotation (X); and
a punch (106) with a cylindrical housing (106a) of a predetermined length extending between a sampling end (106a') and an opposite installation end (106a"), the punch comprising:
a die-cutter (108) provided at the sampling end for perforating the rubber strip and for obtaining samples (500) of the rubber strip during its movement, the punch having an annular blade (108a) of a predetermined diameter;
a fastening and support member (110) provided at the installation end to carry out installation of the punch (106) with respect to a drive shaft (112) to which the punch is rotatably attached, the punch rotating in the same direction as the movement of the rubber strip;
an ejector (114) disposed within the housing (106a) that moves along a common longitudinal axis (Y) among the ejector, the housing and the die-cutter, the ejector comprising a structure (114a) with a predetermined length that extends between a release end (114a') and an opposite attachment end (114a"), and the attachment end comprising a fastener (116); and
a rod cylinder (118) constituting a piston (120) with a rod (120a) and a chamber (122) in which the piston slides, the rod cylinder comprising a fastening device for connecting the piston and the ejector (114) so that the movement of the piston in the chamber upon supply of a pressurized fluid effects corresponding movement of the ejector between a standby position and a release position, **characterized in that** the release end comprising a domed surface (S) that facilitates release of the sample.

2. The system of claim 1, wherein the ejector further comprises a recess (114b) in the structure (114a) in which a hook (126) is arranged such that the hook extends from the domed surface (S) when the ejector is in the standby position, and such that each sample (500) is released by the ejector when the ejector is in the release position.

3. The system of claim 2, wherein the hook includes an arm (128) with an inclined surface (128a) that engages a corresponding inclined surface (114b') of the recess (114b) to allow complementary movement of the ejector (114) relative to the attached hook.

4. The system of claim 3, wherein the arm has an engagement end (128b) at which a catch (128c) is provided that includes one or more grooves (128d) for the hook to engage samples taken from the rubber strip simultaneously with their sampling by the die-cutter (108).

5. The system of any of the foregoing claims, wherein the punch further comprises a guide ring (130) with an opening (130a), the guide ring being disposed at the sampling end of the housing (106a) along a common longitudinal axis among the housing, the die-cutter and the ejector in order to guide the ejector between the standby position and the release position.

6. The system of one of the previous claims, wherein the fastening and support element includes two or more conduits in fluid communication with corresponding conduits (124) that supply the rod cylinder with pressurized fluid.

7. An automated process for sampling a rubber strip (1000) moving in a predetermined direction, the process comprising the following steps:
a first phase of the process comprising the following steps:
the step of shaping the rubber strip to a predetermined thickness;
the step of directing the rubber strip, after shaping, to an automatic sampling system of any one of the claims 1 to 6, such that the rubber strip passes between the anvil (102) and the punch (106);
the step of rotating the punch in the same direction as the movement of the rubber strip with the ejector in a standby position;
a second phase of the process comprising the following steps:
the step of sampling the rubber strip by the die-cutter (108) with the ejector remaining in the standby position and the hook (126) engaging the rubber strip simultaneously with continuous rotation of the punch; and
the step of taking a sample (500) with the die-cutter;
a third phase of the process comprising the following step:
the step of engaging the sample taken during the second phase, with the ejector remaining in the standby position and with the hook securing the sample taken while the punch rotates to a down position;
and a fourth phase of the process comprising the following steps:
the step of supplying the rod cylinder (118) with pressurized fluid to effect corresponding movement of the ejector (114) from the standby position to the release position, this step being performed simultaneously with the continuous rotation of the punch to the down position; and
the step of releasing the sample from the domed surface (S) to a recovery means.

8. The process of claim 7, further comprising the step of training the automatic sampling system (100) to recognize at least one of an optimal size and an optimal frequency for sampling the rubber strip.

9. The process of claim 7 or claim 8, further comprising classifying samples generated by self-learning means.
